# EUROPEAN PATENT APPLICATION

(11) **EP 2 043 327 A2**
(43) Date of publication of application: **01.04.2009**
(21) Application number: 08165219.0
(22) Date of filing: 26.09.2008
(51) Int. Cl.: H04L 29/06

(54) **Secure document transmission**

(30) Priority: 26.09.2007 US 861495
(71) Applicant: Xerox Corporation, Rochester, NY 14644 (US)
(72) Inventor: Roantree, Martin, Brookmans Park, Hertfordshire AL9 7RR (GB); Cheshire, Alex M., St. Albans, Hertfordshire AL4 9BJ (GB); Robert, Dowell, Milton Keynes, Buckinghamshire MK14 6AY (GB); Gajadevasangary, Sahadevasangary, Stevenage, Hertfordshire SG1 6GL (GB)
(74) Representative: Grünecker, Kinkeldey, Stockmair & Schwanhäusser Anwaltssozietät

(57) **Abstract**

A method and apparatus transmits an item that is in electronic form over multiple networks. The method begins by receiving the item that is to be electronically transmitted. The method separates the item into at least a first fragment and a second fragment, transmits the first fragment over a first network to a receiving device, and transmits the second fragment over a second network to the receiving device. After the receiving device receives all the different fragments, it combines the first fragment and the second fragment to reproduce the item.

## Description

### BACKGROUND AND SUMMARY

Embodiments herein generally relate to systems, methods, services, etc. for securely transmitting items such as documents over electronic communication networks and more particularly to embodiments that separate the item into different fragments and then transmit the different fragments over different networks to the same receiving location.

While most physical items need to be transported from a first location to a second location, other items that are capable of being placed into electronic form can be transmitted from a first location to a second location. For example, items such as documents, photographs, spreadsheets, audio files, video files, data files, etc., can be scanned in, typed in, or converted to electronic form. This electronic form of the item can be sent from one fax machine to a compatible fax machine or sent from one computerized device to another computerized device over a computerized network, such as a local area network (LAN) or a wide area network (WAN).

For example, a facsimile transmission system described in U.S. Patent Publication 2007/0060120 (the full disclosure of which is incorporated herein by reference) allows a user to transmit the digital data representing a document over land and wireless networks. This system facilitates bi-directional communication between a first modem equipped facsimile machine connected to a digital cellular or wireless network via the first telemetry device and a second modem equipped facsimile machine connected to a (land plain old telephone system (POTS)) telephone line or wireless network via a second telemetry device. Data transport over public switched telephone networks (PSTN) or wireless networks can be via a circuit-switched or packet data connection.

Similarly, U.S. Patent Publications 2005/0268224 and 2005/0210031 (the full disclosures of which are incorporated herein by reference) provide explanations of methods for transmitting documents over a single data communications network. U.S. Patent Publication 2002/0143863 (the full disclosure of which is incorporated herein by reference) discloses a system that only transmits a page, instead of a whole document to allow the transmission time to be less.

However, if the electronic form of the item is intercepted as it is being transmitted over the network, it may be inappropriately obtained and misused. Many forms of security are utilized to prevent electronic items from being intercepted or from being deciphered if they are intercepted. For example, it is common to place the electronic item in an encrypted form before transmitting it over the network. In such a situation, if an item is inappropriately intercepted from the network, unless the interceptor is capable of decrypting the encrypted electronic item, the interceptor will not be able to access the electronic item. However, many times the item may be decrypted by the interceptor and be inappropriated.

Conventional document transmission between two terminals will normally be completed on a single communication network. Examples of this include a fax document that is sent between two facsimile machines over a public switched telephone network (PSTN) using two telephone lines (one sending, one receiving), e-mails sent over LANs or WANs, etc. The present embodiments are directed toward improving the security of electronic item transmission by separating the electronic item into fragments (which may or may not be encrypted) adding routing headers to the fragments and sending the fragments over different communication networks. The fragments are recombined at the receiver to allow the original electronic item to be reproduced. As the fragments are being transmitted over the different networks, it becomes difficult or impossible to reproduce the entire original electronic item from an interception scheme that is located in only one of the networks.

Therefore, stated generally, embodiments herein provide a method and apparatus for transmitting an item that is in electronic form over multiple networks. The method begins by receiving or creating the item to be electronically transmitted. The method separates the item into at least a first fragment and a second fragment, transmits the first fragment over a first network to a receiving device, and transmits the second fragment over a second network to the receiving device. As would be understood by one ordinarily skilled in the art, the embodiments herein can separate the electronic item into many different fragments (tens, hundreds, thousands, etc., of fragments) but only a first fragment and second fragment are discussed herein so as to simplify the discussion. After the receiving device receives all the different fragments, it combines the first fragment and the second fragment to reproduce the item.

The different networks can differ in many ways. For example, the first network can comprise first sending and receiving node addresses that are different than second sending and receiving node addresses of the second network. Alternatively, the first network can have different data transfer characteristics than the second network. Similarly, the first network can comprise one network type of all possible network types (including, but not limited to, a circuit-switched network type; a distributed technology network type; a digital subscriber loop (DSL) network type; an integrated service digital network (ISDN) network type; a plain old telephone services (POTS) network type; a public switched telephone network (PSTN) network type; a cable modem network type; a fiber optic services network type; a wireless network type; and/or all other network types whether currently known or developed in the future) and the second network can comprise a different one of these network types.

In some examples herein, that utilize communications between compatible facsimile machines, the first network comprises a connection between a first telephone line (sending line) and a second telephone line (receiving line) and the second network comprises a connection between a third telephone line (sending line) and a fourth telephone line (receiving line) where the first telephone line, the second telephone line, the third telephone line, and the forth telephone lines are separate telephone lines with separate telephone numbers.

An apparatus embodiment herein comprises a central processing unit and an input (which can be a graphic user interface, a network input, a peripheral input, etc.) that is operatively connected to the central processing unit. The input is adapted to receive the item in electronic form. The apparatus embodiment includes a separator that is also operatively connected to the central processing unit. The separator is adapted to separate the item into at least a first fragment and a second fragment. A first network connection is operatively connected to the central processing unit and is adapted to be connected to a first network. The central processing unit is adapted to transmit, through the first network connection, the first fragment over the first network. A second network connection is operatively connected to the central processing unit and is adapted to be connected to a second network. Similarly, the central processing unit is adapted to transmit, through the second network connection, the second fragment over the second network.

The first network connection and the second network connection are also adapted to receive first fragments and second fragments, respectively, of other items transmitted to the apparatus over the first network and the second network. The apparatus also includes a combiner operatively connected to the central processing unit that is adapted to combine the first fragments and the second fragments of the other items to reproduce the other items.
In one embodiment of the apparatus of claim 15, all the limitations of which are incorporated herein by reference, wherein said first network comprises first sending and receiving node addresses that are different than second sending and receiving node addresses of said second network.
In a further embodiment all the limitations of which are incorporated herein by reference, wherein said first network is independently managed from said second network.
In a further embodiment, all the limitations of which are incorporated herein by reference, wherein said first network comprises one network type of possible network types comprising: circuit-switched network type; distributed technology network type; Digital Subscriber Loop (DSL) network type; Integrated Service Digital Network (ISDN) network type; plain old telephone services (POTS) network type; public switched telephone network (PSTN) network type; cable modem network type; fiber optic services network type; or wireless network type, and
wherein said second network comprises a different network type of said possible network types than said one network type.
In a further embodiment, all the limitations of which are incorporated herein by reference, wherein said apparatus comprises a facsimile machine,
wherein said first network comprises a connection between a first telephone line and a second telephone line,
wherein said second network comprises a connection between a third telephone line and a fourth telephone line, and
wherein said first telephone line, said second telephone line, said third telephone line, and said forth telephone lines are separate telephone lines with separate telephone numbers.
The present invention also relates in one aspect to a computer program product comprising:
a computer-usable data carrier storing instructions that, when executed by a computer, cause said computer to perform a method comprising:
   receiving an item to be electronically transmitted;
   separating said item into at least a first fragment and a second fragment;
   transmitting said first fragment over a first network to a receiving device;
   transmitting said second fragment over a second network, different than said first network, to said receiving device; and
   combining said first fragment and said second fragment to reproduce said item.

These and other features are described in, or are apparent from, the following detailed description.

### BRIEF DESCRIPTION OF THE DRAWINGS

Various exemplary embodiments of the systems and methods are described in detail below, with reference to the attached drawing figures, in which:

FIG. 1 is a flow diagram illustrating embodiments herein;

FIG. 2 is a schematic representation of a system embodiment herein; and

FIG. 3 is a schematic representation of a system embodiment herein.

### DETAILED DESCRIPTION

As discussed above, embodiments herein provide systems and methods that separate the item into different fragments and then transmit the different fragments over different networks to the same receiving location.

Conventional document transmission between two terminals will normally be completed on a single communication network. Examples of this include a fax document that is sent between two facsimile machines over a public switched telephone network (PSTN), e-mails sent over LANs or WANs, etc. Another example is asynchronous transfer mode (ATM) networks. ATM is an International Telecommunication Union-Telecommunications Standards Section (ITU-T) standard for cell relay wherein information for multiple service types, such as voice, video, or data, is conveyed in small, fixed-size cells that are sometimes called packets.

However, such systems only transfer items over a single network. For example, when an item is to be transmitted over an ATM network, the transmitting devices declares the characteristics and the quality of service required by the traffic in a traffic contract (in order to make a connection request). The network judges whether it has enough resources available to accept the connection, and then either accepts or rejects the connection request. If there are insufficient resources available in the network at the time, the connection request is rejected. If there are sufficient resources available in the network at the time, the connection request is accepted and the network assigns the resources necessary to the connection. During communication, the network monitors the conformity between the declared characteristics (in the traffic contract) and the characteristics of the actual traffic entering the network. The overall rate at which all the traffic is admitted into the network is governed by the network's traffic shaping policy.

Therefore, even through each different network may contain large numbers of servers, switching stations, transmission lines, etc., each single "network" is centrally managed to ensure that the network maintains a given quality of service. Thus, different networks may be otherwise identical (use similar equipment, use similar protocols, have similar nodes, etc.) yet they can be different simply because they are managed differently or managed independently (or even owned differently). However, the different networks can also utilize different types of equipment, use different protocols, have different nodes, etc., as well as be managed by different entities.

From a document security viewpoint, the use of a single communication network to transmit an entire electronic item is a weakness that allows the communication session to be easily intercepted and recorded by one who has access to the network. Therefore, present embodiments are directed toward improving the security of electronic item transmission by separating the electronic item into fragments (which may or may not be encrypted) and sending the fragments over different communication networks, that are independently managed. The fragments are recombined at the receiver to allow the original electronic item to be reproduced after it is transmitted over the different networks. As the fragments are being transmitted over the different networks, it becomes difficult or impossible for an interceptor to reproduce the entire original electronic item from an interception scheme that is located in only one of the networks.

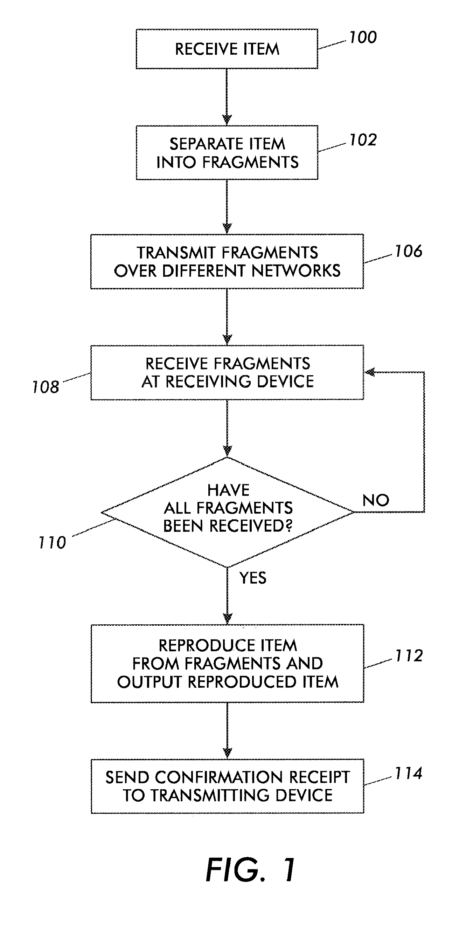

As shown in flowchart form in Figure 1, the methods herein begin their operations in item 100 by receiving the item to be electronically transmitted. The method separates the item into fragments (at least a first fragment and a second fragment) in item 102. These "fragments" can comprise portions of a page (portions of an image) such as the top or bottom (or left or right side) of a page, can comprise lines of text (e.g., every other line of text), can comprise portions of a compressed file that represents the image or text, etc. Fragments of a compressed file are more secure than fragments of an image or fragments of text where, if the image or text fragments are intercepted, at least some of the information from the item may be obtained by the interceptor. To the contrary, fragments of a compressed file are essentially useless without the other information maintained in the compressed file. Therefore, the compressed file does not contain discoverable information until it is recreated from its constituent fragments and the interception of a fragment of a compressed file would not provide the interceptor any useful information.

The method transmits the fragments to the receiving device over different networks in item 106. Thus, in item 106, the method transmits the first fragment over a first network to a receiving device, and transmits the second fragment over a second network to the receiving device. As would be understood by one ordinarily skilled in the art, the embodiments herein can separate the electronic item into many different fragments (tens, hundreds, thousands of fragments) but only a first fragment and second fragment are discussed herein so as to simplify the discussion.

In item 108, the receiving device receives the different fragments from the different networks. Item 110 checks to see if all the fragments have been received. After all fragments have been received, the receiving device recombines the fragments to reproduce and output the item in item 112. In item 114, the receiving device sends a confirmation of complete receipt of all the fragments to the transmitting device.

As mentioned above, the different networks can be quite similar or can differ in many ways, such as being separately managed. For example, the first network can comprise first sending and receiving node addresses that are different than second sending and receiving node addresses of the second network. Alternatively, the first network can have different data transfer characteristics than the second network. Similarly, the first network can comprise one network type of all possible network types (including, but not limited to, a circuit-switched network type; a distributed technology network type; a digital subscriber loop (DSL) network type; an integrated service digital network (ISDN) network type; a plain old telephone services (POTS) network type; a public switched telephone network (PSTN) network type; a cable modem network type; a fiber optic services network type; a wireless network type; and/or all other network types whether currently known or developed in the future) and the second network can comprise a different one of these network types.

In some examples herein, that utilize communications between compatible facsimile machines capable of operating on multiple telephone lines, the first network comprises a connection between a first telephone line and a second telephone line and the second network comprises a connection between a third telephone line and a fourth telephone line (where the first telephone line, the second telephone line, the third telephone line, and the forth telephone lines are separate telephone lines with separate telephone numbers).

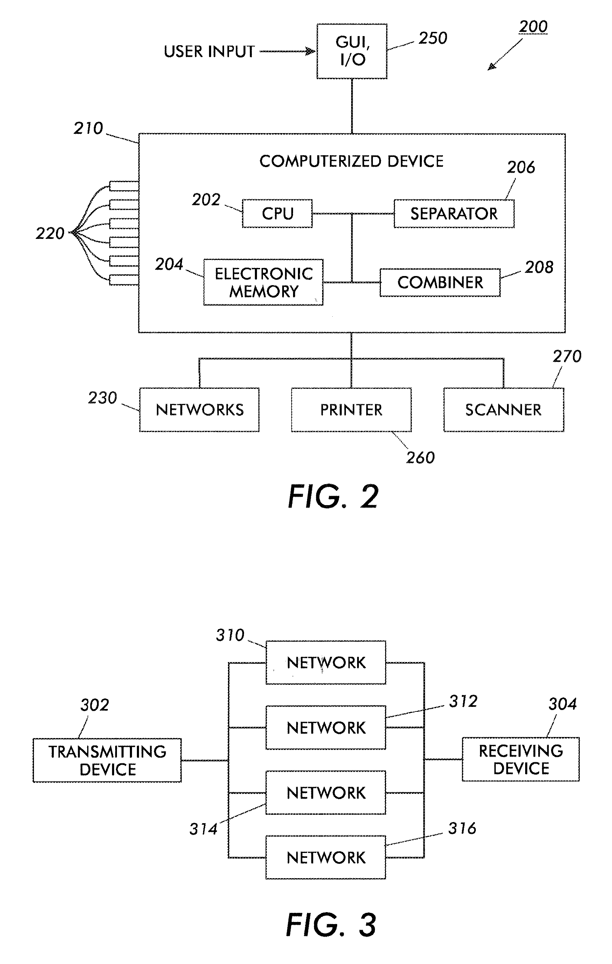

Another embodiment, shown in Figure 2, comprises a system embodiment 200 that includes a computerized device 210. The device 210 can comprise any form of computerized device whether now known or developed in the future such as facsimile machines, computers, personal digital assistants (PDAs), cell phones, music players, cameras, portable memory devices, personal electronics, etc.

This example of an apparatus embodiment herein comprises a central processing unit (CPU) 202, an electronic memory 204, and an input/output (which can be a graphic user interface 250, a network input 230, a peripheral input from, for example, an integral or peripheral scanner 270, etc.). The input 230, 250, 270 is operatively connected to the central processing unit 202. The input 250 is adapted to receive the item in electronic form. The apparatus embodiment includes a separator 206 and a combiner 208 that are also operatively connected to the central processing unit 202. The separator 206 is adapted to separate the item into at least a first fragment and a second fragment, and the combiner 208 is adapted to reassemble first and second fragments that are transmitted to the device 210 shown in Figure 2 from a different, similar device.

A plurality of network connections 220 are also included with the apparatus. These network connections 220 can be similar or different. For example, the network connections 220 can be physically the same type of connector or can be different types of connectors. Irrespective of the physical nature of the network connections 220, each can operate under different logic or at different speeds, depending upon the protocols established for the networks to which the network connections 220 will connect.

Figure 3 illustrates two of the computerized devices 210, one of which is used as a transmitting device 302 and another of which is used as a receiving device 304. Each of the computerized devices 210 has the ability to be both a transmitting device and a receiving device, and are only temporarily labeled as such depending upon each device's current utilization. The transmitting device 302 is connected to the receiving device 304 through a plurality of networks 310-316, at least two of which are different.

One of these network connections 220 comprises a "first" network connection that is operatively connected to the central processing unit 202 and is adapted to be connected to a first network (e.g., network 310). The central processing unit 202 is adapted to transmit, through this first network connection, the first fragment over the first network. A different one of these connections 220 that comprises a "second" network connection that is operatively connected to the central processing unit 202 and is adapted to be connected to a second network (e.g., 314). Similarly, the central processing unit 202 is adapted to transmit, through the second network connection, the second fragment over the second network.

The first and second network connections (220) are also adapted to receive first fragments and second fragments, respectively, of other items transmitted to the apparatus over the first network and the second network. The apparatus 210 also includes a combiner 208 that is operatively connected to the central processing unit 202 and is adapted to combine the first fragments and the second fragments of the other items to reproduce the other items. The computerized device can output the electronic item on the graphic user interface 250, the printer 260, onto the network 230, etc.

One example of a specific application of embodiments herein involves two facsimile machines (which can be represented by items 302 and 304 in Figure 3) that are designed to operate with a secure document. One network connection of each facsimile machine can be connected to a PSTN telephone line (e.g., item 312) and another network connection can be connected to an ISDN connection, or to a different PSTN telephone line (e.g., item 316).

A communication session is established between the facsimile machines along the two different network connections during which each facsimile machine ensures that the other facsimile machine can communicate according to a common protocol and can process the fragments of the item that will be transmitted between the different facsimile machines along the different networks. In this example, a document is scanned by the transmitting facsimile machine which converts a paper document into an electronic item. The electronic item is separated into fragments, each of which has an identifying header added to it. The network may further divide the fragments into network packets for packet based network transfers. The document fragments are transmitted to the receiving facsimile machine which recombines the different fragments to reproduce the electronic item. After the electronic item is reproduced, the receiving facsimile machine sends a confirmation of delivery to the transmitting facsimile machine and prints the electronic item as a reproduction of the original document. As would be understood by one ordinarily skilled in the art, the received image may be printed or held in a secure mailbox, as required. The transmitting and receiving devices can operate in this secure mode or can operate as traditional transmitting and receiving devices depending upon the nature of the document or electronic item being transmitted and its required level of security.

One would not be motivated by the teachings of data packets within ATM networks to utilize different networks because, as explained above, the manager of each network needs to manage the traffic within the network and such teachings only motivate those skilled in the art to use a single independently managed network to transmit the different data packets. Using different networks to transmit data packets in traditional packet-based networks would lead to inconsistency and uncertainty in packet traffic flow, thereby frustrating efforts to manage the data traffic in ATM and similar conventional packet based networks.

Many computerized devices are discussed above. Computerized devices that include input/output devices, memories, processors, antenna, programmable switches, etc. are readily available devices produced by manufactures such as International Business Machines Corporation, Armonk NY, USA and Apple Computer Co., Cupertino CA, USA. Such chips, antenna, switches, etc. commonly include input/output devices, power supplies, processors, electronic storage memories, wiring, etc., the details of which are omitted herefrom to allow the reader to focus on the salient aspects of the embodiments described herein.

The word "printer" as used herein encompasses any apparatus, such as a digital copier, bookmaking machine, facsimile machine, multi-function machine, etc. which performs a print outputting function for any purpose. The details of printers, printing engines, etc. are well-known by those ordinarily skilled in the art and are discussed in, for example, U.S. Patent 6,032,004, the complete disclosure of which is fully incorporated herein by reference. Printers are readily available devices produced by manufactures such as Xerox Corporation, Stamford, CT, USA. Such printers commonly include input/output, power supplies, processors, media movement devices, marking devices etc., the details of which are omitted herefrom to allow the reader to focus on the salient aspects of the embodiments described herein.

Further, the technology to allow a single device to communicate over different networks is well-known and is not discussed herein in detail to maintain focus on the salient elements of embodiments herein. For example, U.S. Patent Publication 2006/0126646 explains that efforts have been made to use different communications technologies in an integrated manner. For example, some cable and satellite set-top boxes have an analog dial-up connection that is used to do pay per-view billing and program set-up. Furthermore, efforts have been made to use multiple networks for improved performance. For example, Digital Subscriber Loop (DSL) architects (and Integrated Service Digital Network (ISDN) system designers before them) use a mechanism called bonding, which combines two DSL circuits to provide increased bandwidth for a single customer. Furthermore, personal video recorders may receive video signals from a number of different sources, such as satellite or a cable television network, and receive guide data over a network connection to the Internet or a dial-up connection over a phone line. Also, U.S. Pat. No. 6,002,722 (incorporated herein by reference) describes a multimode digital modem where voice-band (e.g., V.34), DSL, cable, terrestrial and other wireless, and/or satellite modems are implemented simultaneously by the same digital signal processor (DSP) device.

Thus, as shown above, from a document security viewpoint, the use of a single communication network to transmit an entire electronic item is a weakness that allows in the communication session to be easily intercepted and recorded by one who has access to a given network. Therefore, the present embodiments are directed toward improving the security of electronic item transmission by separating the electronic item into fragments (which may or may not be encrypted) and sending the fragments over different communication networks, that are at least differently managed. The fragments are recombined at the receiver to allow the original electronic item to be reproduced after it is transmitted over the different networks. As the fragments are being transmitted over the different networks, it becomes difficult or impossible for an interceptor to reproduce the entire original electronic item from an interception scheme that is located in only one of the networks.

All foregoing embodiments are specifically applicable to electrostatographic and/or xerographic machines and/or processes as well as to software programs stored on the electronic memory 204 (computer usable data carrier) and to services whereby the foregoing methods are provided to others for a service fee. It will be appreciated that the above-disclosed and other features and functions, or alternatives thereof, may be desirably combined into many other different systems or applications.

## Claims

1. A method comprising:
receiving an item to be electronically transmitted;
separating said item into at least a first fragment and a second fragment;
transmitting said first fragment over a first network to a receiving device;
transmitting said second fragment over a second network, different than said first network, to said receiving device; and
combining said first fragment and said second fragment to reproduce said item.

2. The method according to claim 1, all the limitations of which are incorporated herein by reference, wherein said first network comprises first sending and receiving node addresses that are different than second sending and receiving node addresses of said second network.

3. The method according to claim 1, all the limitations of which are incorporated herein by reference, wherein said first network is independently managed from said second network.

4. The method according to claim 1, all the limitations of which are incorporated herein by reference, wherein said first network comprises one network type of possible network types comprising: circuit-switched network type; distributed technology network type; Digital Subscriber Loop (DSL) network type; Integrated Service Digital Network (ISDN) network type; plain old telephone services (POTS) network type; public switched telephone network (PSTN) network type; cable modem network type; fiber optic services network type; or wireless network type, and
wherein said second network comprises a different network type of said possible network types than said one network type.

5. The method according to claim 1, all the limitations of which are incorporated herein by reference, wherein said first network comprises a connection between a first telephone line and a second telephone line,
wherein said second network comprises a connection between a third telephone line and a fourth telephone line, and
wherein said first telephone line, said second telephone line, said third telephone line, and said forth telephone lines are separate telephone lines with separate telephone numbers.

6. A method comprising:
receiving an item to be electronically transmitted using a transmitting device;
separating, by said transmitting device, said item into at least a first fragment and a second fragment;
transmitting, by said transmitting device, said first fragment over a first network to a receiving device;
transmitting, by said transmitting device, said second fragment over a second network, different than said first network,to said receiving device;
receiving, by said receiving device, said first fragment and said second fragment; and
combining, by said receiving device, said first fragment and said second fragment to reproduce said item.

7. The method according to claim 6, all the limitations of which are incorporated herein by reference, wherein said first network comprises first sending and receiving node addresses that are different than second sending and receiving node addresses of said second network.

8. The method according to claim 6, all the limitations of which are incorporated herein by reference, wherein said first network is independently managed from said second network.

9. The method according to claim 6, all the limitations of which are incorporated herein by reference, wherein said first network comprises one network type of possible network types comprising: circuit-switched network type; distributed technology network type; Digital Subscriber Loop (DSL) network type; Integrated Service Digital Network (ISDN) network type; plain old telephone services (POTS) network type; public switched telephone network (PSTN) network type; cable modem network type; fiber optic services network type; or wireless network type, and
wherein said second network comprises a different network type of said possible network types than said one network type.

10. An apparatus comprising:
a central processing unit;
an input operatively connected to said central processing unit and being adapted to receive an item;
a separator operatively connected to said central processing unit and being adapted to separate said item into at least a first fragment and a second fragment;
a first network connection operatively connected to said central processing unit and being adapted to be connected to a first network, wherein said central processing unit is adapted to transmit, through said first network connection, said first fragment over said first network;
a second network connection operatively connected to said central processing unit and being adapted to be connected to a second network, different than said first network, wherein said central processing unit is adapted to transmit, through said second network connection, said second fragment over said second network, and wherein said first network connection and said second network connection are adapted to receive first fragments and second fragments of other items respectively transmitted to said apparatus respectively over said first network and said second network; and
a combiner operatively connected to said central processing unit, and being adapted to combine said first fragments and said second fragments of said other items to reproduce said other items.

11. The apparatus according to claim 10, all the limitations of which are incorporated herein by reference, wherein said first network comprises first sending and receiving node addresses that are different than second sending and receiving node addresses of said second network.

12. The apparatus according to claim 10, all the limitations of which are incorporated herein by reference, wherein said first network is independently managed from said second network.

13. The apparatus according to claim 10, all the limitations of which are incorporated herein by reference, wherein said first network comprises one network type of possible network types comprising: circuit-switched network type; distributed technology network type; Digital Subscriber Loop (DSL) network type; Integrated Service Digital Network (ISDN) network type; plain old telephone services (POTS) network type; public switched telephone network (PSTN) network type; cable modem network type; fiber optic services network type; or wireless network type, and
wherein said second network comprises a different network type of said possible network types than said one network type.

14. The apparatus according to claim 10, all the limitations of which are incorporated herein by reference, wherein said apparatus comprises a facsimile machine,
wherein said first network comprises a connection between a first telephone line and a second telephone line,
wherein said second network comprises a connection between a third telephone line and a fourth telephone line, and
wherein said first telephone line, said second telephone line, said third telephone line, and said forth telephone lines are separate telephone lines with separate telephone numbers.

15. An apparatus comprising:
a central processing unit;
an input operatively connected to said central processing unit and being adapted to receive an item;
a separator operatively connected to said central processing unit and being adapted to separate said item into at least a first fragment and a second fragment;
a first network connection operatively connected to said central processing unit and being adapted to be connected to a first network, wherein said central processing unit is adapted to transmit, through said first network connection, said first fragment over said first network; and
a second network connection operatively connected to said central processing unit and being adapted to be connected to a second network, different than said first network,
wherein said central processing unit is adapted to transmit, through said second network connection, said second fragment over said second network.
